# EUROPEAN PATENT SPECIFICATION

(11) **EP 2 568 224 B1**
(45) Date of publication and mention of the grant of the patent: **15.04.2015**
(21) Application number: 11180424.1
(22) Date of filing: 07.09.2011
(51) Int. Cl.: F16K 1/10, F16K 1/52, F24D 19/10

(54) **Stop valve**
Absperrventil
Soupape d'arrêt

(43) Date of publication of application: 13.03.2013
(73) Proprietor: Honeywell Technologies Sarl, 1180 Rolle (CH)
(72) Inventor: Sebesta, Jan, 779 00 Olomouc, Olomouc (CZ); Borastero, Ivan, 68301 Rousinov, Vyskov (CZ); Svejnoha, Petr, 68201 Vyskov (CZ)
(74) Representative: Sturm, Christoph

(56) References cited:
- DE-C- 41 167
- GB-A- 1 256 138
- US-A- 1 936 301
- US-A- 3 565 089
- US-A- 5 004 011

## Description

The invention relates to a stop valve for hydronic installations as defined in the preamble of claim 1.

In hydronic heating or cooling installations, for example in two-pipe heating systems, a hydronic medium tempered by a heat exchanger, for example by a heating boiler, is provided to heating or cooling devices, for example to heating radiators, through at least one supply pipe, whereby the hydronic medium is returned back from the heating or cooling devices to the heat exchanger by at least one return pipe. It is necessary to provide a defined flow within the heating or cooling installation and to provide a defined pressure differential between the supply pipe and the return pipe. This is a significant requirement for an efficient operation of a hydronic heating or cooling installation.

In order to provide a defined pressure differential between the supply pipe and the return pipe of the heating or cooling installation, a so-called differential pressure control valve (DPC valve) is used and installed in the return pipe of the hydronic installations. In order to provide a defined flow within the heating or cooling installation, a so-called double regulating balancing valve (DRV valve) can be used and installed e.g. in the supply pipe of the hydronic installations. However, the use of such a double regulating balancing valve is expensive. Another, less expensive option in order to provide a defined flow within the heating or cooling installation is to use a so-called stop valve in the supply pipe of the hydronic installations. However, such stop valves usually have a high so-called kᵥₛ-value (cv-value) which results in a small pressure drop across the stop valve when the same is in an opened position. This makes it difficult to measure the flow within the heating or cooling installation and to provide the defined flow within the heating or cooling installation.

A stop valve for hydronic installations as defined in the preamble of claim 1 is disclosed by GB 1 256 138 A.

Other prior art stop valves are known from US 5 004 011 A, from US 3 565 089 A, from US 1 936 301 A and from DE 41 167 C.

Against this background, a novel stop valve is provided allowing an accurate flow measurement within a heating or cooling installation.

According to the present invention, the stop valve is characterized by the features of the characterizing portion of claim 1.

The novel stop valve allows an accurate flow measurement within a heating or cooling installation. The valve seat and the valve plunger provide a throttled opening between the same in the flow measurement position of the valve plunger, said throttled opening providing a defined kᵥₛ-value (cv-value) of the stop valve and thereby a defined pressure drop between the valve inlet and the valve outlet when the valve plunger is in its measurement position.

Preferred developments of the invention are provided by the dependent claims and the description which follows. Exemplary embodiments are explained in more detail on the basis of the drawing, in which:
- Figure 1: shows a cross sectional view of a stop valve in a closed position of the same;
- Figure 2: shows a cross sectional view of the stop valve of Figure 1 in an opened position of the same;
- Figure 3: shows a cross sectional view of the stop valve of Figure 1 in a flow measurement position of the same using a separate stop element not covered by the invention;
- Figure 4: shows a detail of Figure 3; and
- Figure 5: shows a detail of a stop valve according to the invention.

The present invention relates to a stop valve 10. Such a stop valve 10 is used in hydronic heating or cooling installations to provide a shut-off function in a pipe of the hydronic heating or cooling installation.

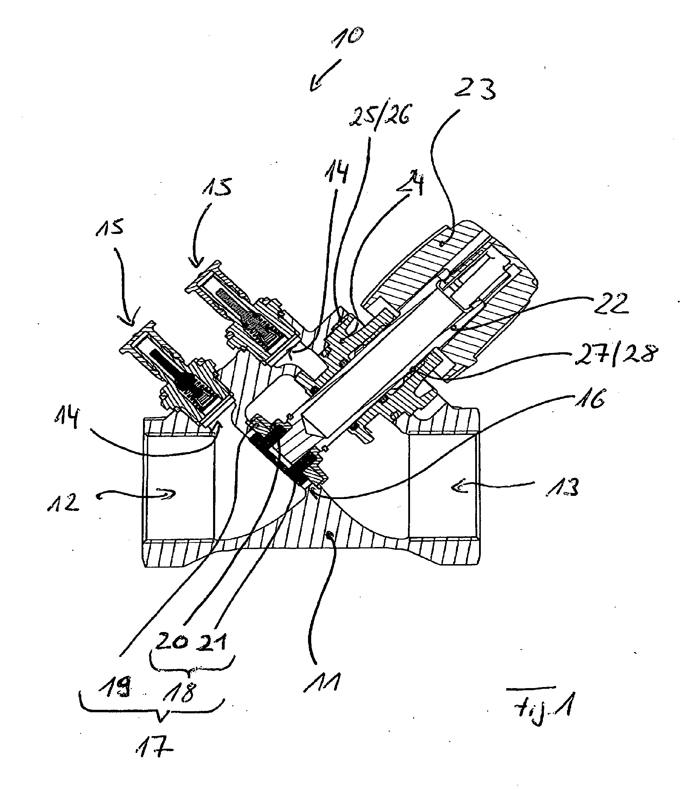

Figures 1 to 3 each show a cross section through a stop valve 10 in different positions of the same.

The stop valve 10 comprises a valve housing 11. The valve housing 11 comprises a valve inlet 12, a valve outlet 13 and connection terminals 14 for pressure test valves 15. The valve inlet 12 and valve outlet 13 of the valve housing 11 are connectable into a pipe of a hydronic installation, e.g. in a supply pipe of a hydronic installation.

The valve housing 11 provides a valve seat 16. A valve plunger 17 acts together with the valve seat 16. The stop valve 10 is closed when the valve plunger 17 is pressed against the valve seat 16. The stop valve 10 is opened when the valve plunger 17 is lifted up from the valve seat 16.

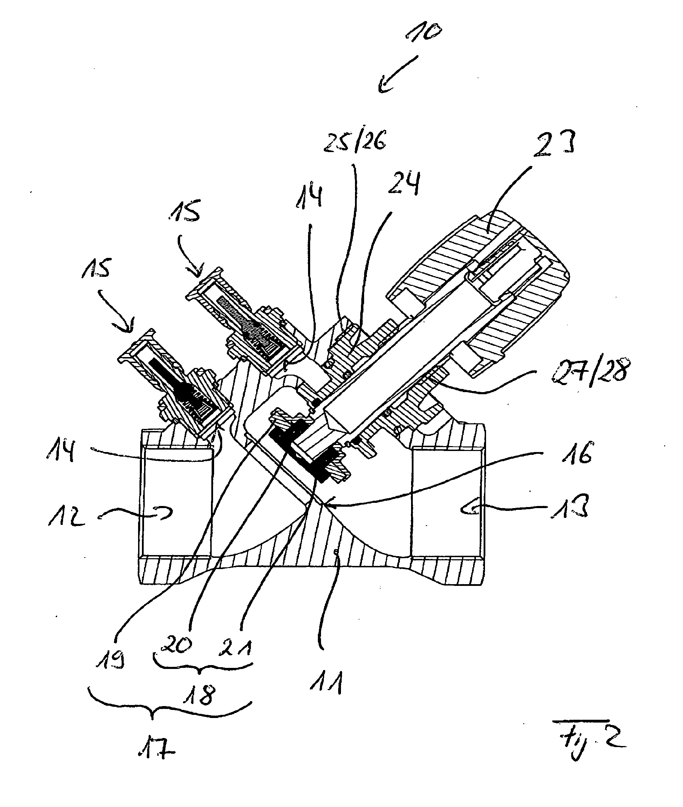

The valve plunger 17 comprises a plunger body 18 carrying a sealing element 19. When the stop valve 10 is closed (see Figure 1), the sealing element 19 of the valve plunger 17 is pressed against the valve seat 16. When the stop valve 10 is opened (see Figure 2), the sealing element 19 of the valve plunger 17 is lifted up from the valve seat 16. The sealing element 19 is positioned between an upper part 20 and a lower part 21 of the plunger body 18.

The valve plunger 17 is mounted to a first end of a valve stem 22. A hand wheel 23 is mounted to a second end of the valve stem 22 for transferring the valve plunger 17 mounted to the first end of the valve stem 22 between its closed position and its opened position.

The hand wheel 23 is like the valve plunger 17 fixedly attached to the valve stem 22. A valve insert 24 is positioned between the valve stem 22 and the valve housing 11, whereby the valve insert 24 is screwed into an opening of the valve housing 11 by an outer thread 25 of the valve insert 24 acting together with an inner thread 26 of the valve housing 11. The valve stem 22 comprises an outer thread 27 acting together with an inner thread 28 of valve insert 24, so that the valve stem 22 and thereby the valve plunger 17 can be transferred between the closed position (see Figure 1) and the opened position (see Figure 2) by rotating the hand wheel 23 and thereby moving the valve stem 22 relative to the valve insert 24 and the valve housing 11.

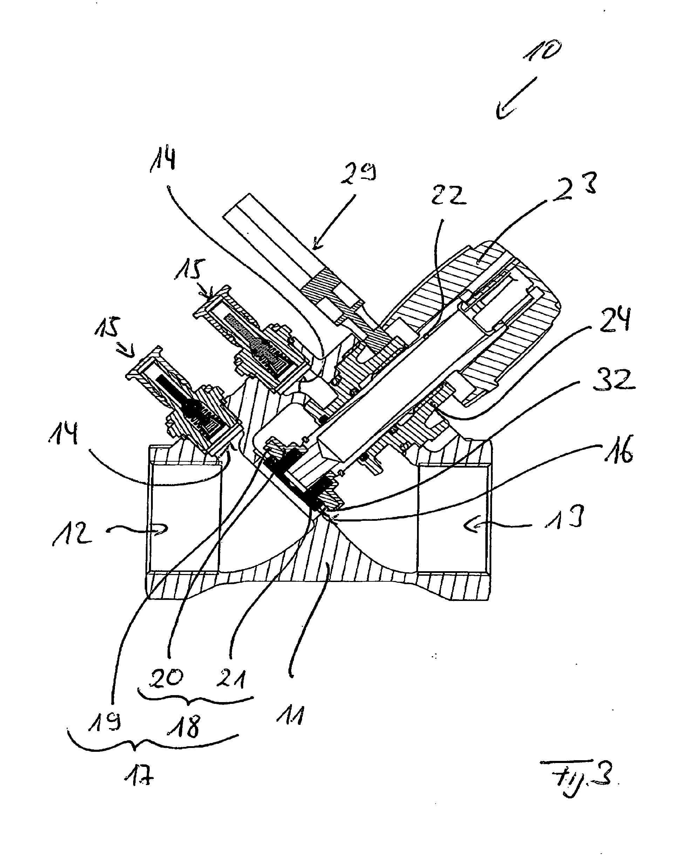

The stop valve 10 is in addition to the closed position (see Figure 1) and the opened position (see Figure 2) characterized by a flow measurement position (see Figure 3) of the valve plunger 17 providing a defined pressure drop between the valve inlet 12 and the valve outlet 13 when the valve plunger 17 is in its measurement position. The flow measurement position of the valve plunger 17 is positioned between its closed position and its opened position, meaning that the position of the valve plunger 17 in the flow measurement position (see Figure 3) is between the position of the valve plunger 17 in the closed position (see Figure 1) and the position of the valve plunger 17 in the opened position (see Figure 2), whereby the position of the valve plunger 17 in the flow measurement position is closer to the closed position than to the opened position of the same.

The valve seat 16 and the valve plunger 17 provide a throttled opening 32 between the same in the flow measurement position of the valve plunger 17, said throttled opening 32 providing a defined kᵥₛ-value (cv-value) of the stop valve 10 and thereby a defined pressure drop between the valve inlet 12 and the valve outlet 13 when the valve plunger 17 is in its flow measurement position. The throttled opening 32 and thereby the k_{VS}-value (cv-value) are defined by an inner surface of the valve seat 16 and an outer surface of the valve plunger 17.

The flow measurement position of the valve plunger 17 and thereby of the stop valve 10 is defined by a mechanical stop element 29. The mechanical stop element 29 limits the movement of the valve plunger 17 when the same is transferred from its opened position in its closed position by operating or rotating the hand wheel 23.

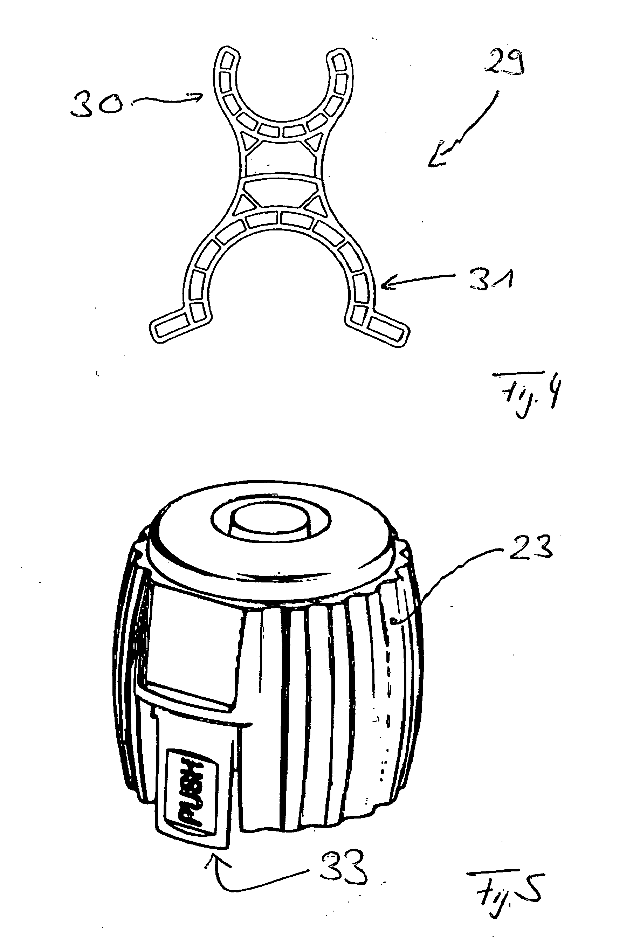

In the comparative embodiment shown in Figure 3, the mechanical stop element 29 is provided by a separate stop element which can be positioned between the hand wheel 23 and the valve housing 11 for the flow measurement and which can be removed after the flow measurement. Figure 3 shows such a separate stop element 29 being positioned between the valve inset 24 and the hand wheel 23 and thereby limiting the movement of the valve stem 22 and thereby of the valve plunger 17 when moving or transferring the same into the closed position. Figure 4 shows a top view of the separate stop element 29.

The separate stop element 29 is provided by a fork-like element having a first portion 30 providing the mechanical stop of the same and a second portion 31 for handling the same. The first portion 30 can be positioned between the hand wheel 23 and the valve housing 11 for providing the flow measurement position.

In embodiment according to the present invention shown in Figure 5, a mechanical stop element 33 defining the flow measurement position of the valve plunger 17 and thereby of the stop valve 10 is provided by a stop element being an integral part of the hand wheel 23. The mechanical stop element 33 being an integral part of the hand wheel 23 is provided by a push-button of the hand wheel 23, whereby the push-button 33 provides the mechanical stop in the operated position of the same, and whereby the push-button 33 does not provide the mechanical stop in the released position of the same.

The push-button 33 is in its operated position bent radial inwardly with respect to its released position, whereby the push-button 33 acts in its operated position and in the flow measurement position of the valve plunger 17 together with a stop provided by the valve housing 11 or by the valve insert 24 positioned between the valve housing 11 and the valve stem 22.

### List of reference signs

- 10: stop valve
- 11: valve housing
- 12: valve inlet
- 13: valve outlet
- 14: connection terminal
- 15: pressure test valve
- 16: valve seat
- 17: valve plunger
- 18: plunger body
- 19: sealing element
- 20: upper part
- 21: lower part
- 22: valve stem
- 23: hand wheel
- 24: valve insert
- 25: outer thread
- 26: inner thread
- 27: outer thread
- 28: inner thread
- 29: mechanical stop element
- 30: first portion
- 31: second portion
- 32: throttled opening
- 33: mechanical stop element / push-button

## Claims

1. Stop valve for hydronic installations, comprising:
a valve housing (11) providing a valve inlet (12), a valve outlet (13) and a valve seat (16), said valve inlet (12) and valve outlet (13) being connectable into a pipe of the hydronic installation;
a valve plunger (17) mounted to a first end of a valve stem (22) and acting together with the valve seat (16), whereby the stop valve is closed when the valve plunger (17) is in its closed position pressed against the valve seat (16), and whereby the stop valve is opened when the valve plunger (17) is in its opened position lifted up from the valve seat (16);
a hand wheel (23) mounted to a second end of the valve stem (22) for transferring the valve plunger (17) mounted to the first end of the valve stem (22) between its closed position and its opened position;
a flow measurement position of the valve plunger (17) providing a defined pressure drop between the valve inlet (12) and the valve outlet (13) when the valve plunger (17) is in its measurement position, wherein the flow measurement position of the valve plunger (17) is defined by a mechanical stop element (29, 33) limiting the movement of the valve plunger (17) when the same is transferred from its opened position in its closed position by operating the hand wheel (23);
**characterized in that**
the mechanical stop element (33) is provided by a stop element being an integral part of the hand wheel (23);
the mechanical stop element is provided by a push-button (33) of the hand wheel (23), whereby the push-button (33) provides a mechanical stop in the operated position of the same and whereby the push-button (33) does not provide the mechanical stop in the released position of the same;
the push-button (33) is in its operated position bent inwardly with respect to its released position, whereby the push-button (33) acts in its operated position and in the flow measurement position of the valve plunger (17) together with a stop provided by the valve housing (11) or by a valve insert (24) positioned between the valve housing (11) and the valve stem (22).

2. Stop valve as claimed in claim 1, **characterized in that** the valve seat (16) and the valve plunger (17) provide a throttled opening (32) between the same in the flow measurement position of the valve plunger (17), said throttled opening (32) providing a defined kᵥₛ-value of the stop valve and thereby a defined pressure drop between the valve inlet (12) and the valve outlet (13) when the valve plunger (17) in its measurement position.

3. Stop valve as claimed in claim 2, **characterized in that** the throttled opening (32) and the kᵥₛ-value are defined by an inner surface of the valve seat (16) and an outer surface of the valve plunger (17).

## Patentansprüche

1. Sperrventil für hydronische Installationen, das Folgendes umfasst:
ein Ventilgehäuse (11), das eine Ventileintrittsöffnung (12), eine Ventilaustrittsöffnung (13) und einen Ventilsitz (16) bereitstellt, wobei die Ventileintrittsöffnung (12) und die Ventilaustrittsöffnung (13) in einer Leitung der hydronischen Installation anschließbar sind;
einen Ventilkolben (17), der an einem ersten Ende eines Ventilschafts (22) befestigt ist und zusammen mit dem Ventilsitz (16) agiert, wobei das Sperrventil geschlossen ist, wenn der Ventilkolben (17) in seiner geschlossenen Position gegen den Ventilsitz (16) gedrückt wird, und wobei das Sperrventil geöffnet ist, wenn der Ventilkolben (17) in seiner geöffneten Position von dem Ventilsitz (16) angehoben ist;
ein Handrad (23), das an einem zweiten Ende des Ventilschafts (22) befestigt ist, um den an dem ersten Ende des Ventilschafts (22) befestigten Ventilkolben (17) zwischen seiner geschlossenen Position und seiner geöffneten Position zu verlagern;
eine Durchflussmessposition des Ventilkolbens (17), die einen definierten Druckabfall zwischen der Ventileintrittsöffnung (12) und der Ventilaustrittsöffnung (13) liefert, wenn der Ventilkolben (17) in seiner Messposition ist, wobei die Durchflussmessposition des Ventilkolbens (17) durch ein mechanisches Anschlagelement (29, 33) definiert ist, das die Bewegung des Ventilkolbens (17) begrenzt, wenn dieser durch Bedienen des Handrads (23) von seiner geöffneten Position in seine geschlossene Position verlagert wird;
**dadurch gekennzeichnet, dass**
das mechanische Anschlagelement (33) durch ein Anschlagelement gebildet ist, das mit dem Handrad (23) einteilig ausgebildet ist;
das mechanische Anschlagelement durch einen Druckknopf (33) des Handrads (23) gebildet ist, wobei der Druckknopf (33) in der betätigten Position desselben einen mechanischen Anschlag bildet und wobei der Druckknopf (33) in der gelösten Position desselben nicht den mechanischen Anschlag bildet;
der Druckknopf (33) in seiner betätigten Position in Bezug auf seine gelöste Position nach innen gebogen ist, wobei der Druckknopf (33) in seiner betätigten Position und in der Durchflussmessposition des Ventilkolbens (17) zusammen mit einem Anschlag, der durch das Ventilgehäuse (11) oder durch einen zwischen dem Ventilgehäuse (11) und dem Ventilschaft (22) positionierten Ventileinsatz (24) gebildet ist, wirkt.

2. Sperrventil nach Anspruch 1, **dadurch gekennzeichnet, dass** der Ventilsitz (16) und der Ventilkolben (17) eine gedrosselte Öffnung (32) zwischen denselben in der Durchflussmessposition des Ventilkolbens (17) bereitstellen, wobei die gedrosselte Öffnung (32) einen definierten kᵥₛ-Wert des Sperrventils und dadurch einen definierten Druckabfall zwischen der Ventileintrittsöffnung (12) und der Ventilaustrittsöffnung (13) bereitstellt, wenn der Ventilkolben (17) in seiner Messposition ist.

3. Sperrventil nach Anspruch 2, **dadurch gekennzeichnet, dass** die gedrosselte Öffnung (32) und der kᵥₛ-Wert durch eine innere Fläche des Ventilsitzes (16) und eine äußere Fläche des Ventilkolbens (17) definiert sind.

## Revendications

1. Soupape d'arrêt pour des installations hydroniques, comprenant :
un boîtier de soupape (11) présentant une entrée de soupape (12), une sortie de soupape (13) et un siège de soupape (16), ladite entrée de soupape (12) et ladite sortie de soupape (13) pouvant être connectées dans un tuyau de l'installation hydronique ;
un plongeur de soupape (17) monté sur une première extrémité d'une tige de soupape (22) et agissant conjointement avec le siège de soupape (16), la soupape d'arrêt étant fermée lorsque le plongeur de soupape (17) est dans sa position fermée pressée contre le siège de soupape (16), et la soupape d'arrêt étant ouverte lorsque le plongeur de soupape (17) est dans sa position ouverte soulevée du siège de soupape (16) ;
une roue à main (23) montée sur une deuxième extrémité de la tige de soupape (22) pour transférer le plongeur de soupape (17) monté sur la première extrémité de la tige de soupape (22) entre sa position fermée et sa position ouverte ;
une position de mesure d'écoulement du plongeur de soupape (17) fournissant une chute de pression définie entre l'entrée de soupape (12) et la sortie de soupape (13) lorsque le plongeur de soupape (17) est dans sa position de mesure, la position de mesure d'écoulement du plongeur de soupape (17) étant définie par un élément de butée mécanique (29, 33) limitant le mouvement du plongeur de soupape (17) lorsque celui-ci est transféré de sa position ouverte dans sa position fermée en actionnant la roue à main (23) ;
**caractérisée en ce que**
l'élément de butée mécanique (33) est fourni par un élément de butée faisant partie intégrante de la roue à main (23) ;
l'élément de butée mécanique est fourni par un bouton-poussoir (33) de la roue à main (23), le bouton-poussoir (33) fournissant une butée mécanique dans la position actionnée de celui-ci et le bouton-poussoir (33) ne fournissant pas la butée mécanique dans la position libérée de celui-ci ;
le bouton-poussoir (33), dans sa position actionnée, est courbé vers l'intérieur par rapport à sa position libérée, le bouton-poussoir (33) agissant, dans sa position actionnée et dans la position de mesure d'écoulement du plongeur de soupape (17), conjointement avec une butée fournie par le boîtier de soupape (11) ou par un insert de soupape (24) positionné entre le boîtier de soupape (11) et la tige de soupape (22).

2. Soupape d'arrêt selon la revendication 1, **caractérisée en ce que** le siège de soupape (16) et le plongeur de soupape (17) fournissent une ouverture étranglée (32) entre ceux-ci dans la position de mesure d'écoulement du plongeur de soupape (17), ladite ouverture étranglée (32) fournissant une valeur kᵥₛ définie de la soupape d'arrêt et par conséquent une chute de pression définie entre l'entrée de soupape (12) et la sortie de soupape (13) lorsque le plongeur de soupape (17) est dans sa position de mesure.

3. Soupape d'arrêt selon la revendication 2, **caractérisée en ce que** l'ouverture étranglée (32) et la valeur kᵥₛ sont définies par une surface interne du siège de soupape (16) et une surface externe du plongeur de soupape (17).
